# EUROPÄISCHE PATENTSCHRIFT

(11) **EP 3 921 561 B1**
(45) Veröffentlichungstag und Bekanntmachung des Hinweises auf die Patenterteilung: **03.04.2024**
(21) Anmeldenummer: 20703209.5
(22) Anmeldetag: 03.02.2020
(51) Int. Cl.: F16H 57/025, F16H 57/039, B62D 1/181

(54) **VERSTELLANTRIEB FÜR EINE LENKSÄULE, ANTRIEBSEINHEIT FÜR EINEN VERSTELLANTRIEB, MOTORISCH VERSTELLBARE LENKSÄULE FÜR EIN KRAFTFAHRZEUG UND VERFAHREN ZUR HERSTELLUNG EINES VERSTELLANTRIEBS FÜR EINE LENKSÄULE**
ADJUSTMENT DRIVE FOR A STEERING COLUMN, DRIVE UNIT FOR AN ADJUSTMENT DRIVE, MOTOR-ADJUSTABLE STEERING COLUMN FOR A MOTOR VEHICLE, AND METHOD FOR PRODUCING AN ADJUSTMENT DRIVE FOR A STEERING COLUMN
ENTRAÎNEMENT DE RÉGLAGE POUR UNE COLONNE DE DIRECTION, UNITÉ D'ENTRAÎNEMENT POUR UN ENTRAÎNEMENT DE RÉGLAGE, COLONNE DE DIRECTION À RÉGLAGE MOTORISÉ POUR UN VÉHICULE AUTOMOBILE ET PROCÉDÉ DE FABRICATION D'UN ENTRAÎNEMENT DE RÉGLAGE POUR UNE COLONNE DE DIRECTION

(30) Priorität: 07.02.2019 DE 102019201611
(43) Veröffentlichungstag der Anmeldung: 15.12.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2020/052528
(87) Internationale Veröffentlichungsnummer: WO 2020/161032

(56) Entgegenhaltungen:
- DE-A1-102017 200 213
- DE-A1-102017 206 551
- DE-U1- 8 903 713
- US-A1- 2011 133 584

## Beschreibung

### Stand der Technik

Die Erfindung betrifft einen Verstellantrieb für eine motorisch verstellbare Lenksäule für ein Kraftfahrzeug, umfassend ein Getriebe mit einer Antriebsbaugruppe, in dem ein um eine Antriebsachse drehend antreibbares Antriebsrad gelagert ist, welches in Wirkeingriff steht mit einem Getrieberad, welches um eine Getriebeachse drehbar in einer Getriebebaugruppe gelagert ist und welches mit einer Gewindespindel oder einer Spindelmutter eines Spindeltriebs verbunden ist, wobei die Antriebsbaugruppe und die Getriebebaugruppe gegeneinander gerichtete Fügeabschnitte aufweisen und durch mindestens eine Fügeverbindung miteinander verbunden sind. Weiterhin bezieht sich die Erfindung auf eine Antriebseinheit für einen Verstellantrieb, eine motorisch verstellbare Lenksäule für ein Kraftfahrzeug, sowie ein Verfahren zur Herstellung eines Verstellantriebs für eine motorisch verstellbare Lenksäule.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann. An einer Lenksäule können eine motorische Längs- und Höhenverstellung einzeln oder in Kombination ausgebildet sein.

Es ist im Stand der Technik bekannt, zur Verstellung der Stelleinheit relativ zur Trageinheit einen motorischen Verstellantrieb vorzusehen. Dieser umfasst eine Antriebseinheit mit einem elektrischen Stellmotor, der über ein Getriebe mit einem Spindeltrieb verbunden ist, der eine in eine Spindelmutter eingeschraubte Gewindespindel aufweist. Durch die Antriebseinheit sind die Gewindespindel und die Spindelmutter gegeneinander um eine Achse, nämlich die Gewindespindelachse, drehend antreibbar, wodurch die Gewindespindel und die Spindelmutter je nach Drehrichtung in Richtung der Gewindespindelachse translatorisch aufeinander zu oder voneinander weg bewegt werden können. In einer Ausführungsform ist die Gewindespindel von der Antriebseinheit, die feststehend mit der Stell- oder Manteleinheit oder der Trageinheit verbunden ist, um ihre Gewindespindelachse drehend antreibbar und greift in die Spindelmutter ein, die an der Trageinheit oder alternativ an der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt. Diese Ausführung wird daher auch als Rotationsspindelantrieb bezeichnet.

In einer alternativen Ausführungsform ist die Gewindespindel bezüglich Drehung um ihre Gewindespindelachse unverdrehbar mit der Trageinheit oder alternativ mit der Stelleinheit gekoppelt und die Spindelmutter ist drehend antreibbar, aber in Richtung der Gewindespindelachse feststehend entsprechend an der Stelleinheit oder alternativ an der Trageinheit abgestützt. Wie in der ersten Ausführungsform stützt sich in Richtung der Gewindespindelachse die Gewindespindel an der Trageinheit oder an der Stelleinheit ab, und die Spindelmutter entsprechend an der Stelleinheit oder an der Trageinheit, so dass die Gewindespindel in Richtung der Gewindespindelachse translatorisch verschiebbar ist, indem die Spindelmutter von der Antriebseinheit um die Gewindespindelachse drehend angetrieben wird. Diese Ausführung wird auch als Tauchspindelantrieb bezeichnet.

Der Antrieb des Spindeltriebs erfolgt von der Antriebseinheit über ein um seine Getriebeachse, die identisch mit der Gewindespindelachse ist, drehend antreibbares Getrieberad, welches je nach Ausführung des Spindeltriebs mit der Spindelmutter oder mit der Gewindespindel drehfest verbunden ist. Das Getrieberad weist beispielsweise einen Verzahnungsabschnitt in Form eines Stirnrads auf, mit einer außen umlaufenden Verzahnung oder Schneckenverzahnung. Der Verzahnungsabschnitt ist in Achsrichtung zwischen zwei koaxial zur Achse umlaufenden, stirnseitigen Lagerflächen angeordnet. Die Lagerflächen sind in einer Lageranordnung zwischen korrespondierenden Außenlagerflächen angeordnet, die feststehend an der Stelleinheit oder der Trageinheit ausgebildet sind, beispielsweise in einem Getriebegehäuse. Dadurch werden die auf das Getrieberad in beiden axialen Richtungen der Gewindespindelachse auf den Spindeltrieb wirkenden Halte- und Verstellkräfte über die Lagerflächen auf die Außenlagerflächen an der Stelleinheit oder der Trageinheit übertragen und das Getrieberad axial abgestützt.

Ein derartiger Verstellantrieb ist beispielsweise aus der DE 10 2014 104 362 A1 bekannt. Dieser weist eine Antriebseinheit mit einem Getriebe auf, in dem ein um eine Antriebsachse von einem elektrischen Stellmotor drehend antreibbares Antriebsrad gelagert ist, welches ein erstes Getriebeglied bildet. Dieses Antriebsrad ist in dem bekannten Beispiel als Schnecke ausgebildet, und steht in Wirkeingriff mit dem Getrieberad, welches in dem Beispiel als korrespondierendes Schneckenrad ausgebildet ist und ein zweites Getriebeglied bildet, das um eine Getriebeachse drehbar in dem Getriebe gelagert ist. Das Getrieberad ist koaxial zur Gewindespindelachse entweder mit der Gewindespindel oder der Spindelmutter verbunden, je nachdem, ob ein Rotationsspindelantrieb oder ein Tauchspindelantrieb realisiert wird.

Das Antriebs- und das Getrieberad sind in Lagern, in der Regel in Wellenlagern, drehbar gelagert, die in einem Getriebegehäuse angebracht sind. Für eine hohe Laufruhe und einen niedrigen Verschleiß ist es erforderlich, dass die Lager möglichst exakt im Wirkeingriff von Antriebs- und Getrieberad zueinander positioniert sind. Um dies zu erreichen, wird in der DE 10 2017 206 551 A1 vorgeschlagen, dass das Getriebe der Antriebseinheit zusammengesetzt ist aus einer Antriebsbaugruppe, die das Antriebsrad aufweist, und einer Getriebebaugruppe, die das Getrieberad aufweist. Die Antriebsbaugruppe und die Getriebebaugruppe werden durch eine Fügeverbindung unlösbar miteinander verbunden, beispielsweise durch eine Schweißverbindung. Dadurch, dass die Antriebs- und Getriebebaugruppe zuerst in optimalem Wirkeingriff von Antriebs- und Getrieberad in einer Montagerichtung relativ zueinander positioniert werden, und dann die Fügeverbindung erzeugt wird, können Toleranzen in vorteilhafter Weise bei der Montage ausgeglichen werden. Damit die Fügeverbindung reproduzierbar mit den geforderten Eigenschaften erzeugt werden kann, ist eine maßhaltige Bearbeitung und exakte Ausrichtung der miteinander zu fügenden Fügeabschnitte von Antriebs- und Getriebebaugruppe erforderlich, wodurch bei der Fertigung ein erhöhter Bearbeitungs- und Montageaufwand entsteht.

Angesichts der vorangehend erläuterten Problematik ist es eine Aufgabe der vorliegenden Erfindung, die Bereitstellung eines Verstellantriebs mit einer zuverlässigen Fügeverbindung bei geringerem Fertigungsaufwand zu ermöglichen.

### Darstellung der Erfindung

Diese Aufgabe wird gelöst durch einen Verstellantrieb für eine motorisch verstellbare Lenksäule für ein Kraftfahrzeug mit den Merkmalen des Anspruchs 1, eine Antriebseinheit für einen Verstellantrieb gemäß Anspruch 9 und eine Lenksäule mit den Merkmalen des Anspruchs 10. Ein erfindungsgemäßes Verfahren eines derartigen Verstellantriebs gemäß Anspruch 11 ermöglicht einen geringeren Fertigungsaufwand. Vorteilhafte Weiterbildungen ergeben sich aus den Unteransprüchen.

Bei einem Verstellantrieb für eine motorisch verstellbare Lenksäule für ein Kraftfahrzeug, umfassend ein Getriebe mit einer Antriebsbaugruppe, in dem ein um eine Antriebsachse drehend antreibbares Antriebsrad gelagert ist, welches in Wirkeingriff steht mit einem Getrieberad, welches um eine Getriebeachse drehbar in einer Getriebebaugruppe gelagert ist und welches mit einer Gewindespindel oder einer Spindelmutter eines Spindeltriebs verbunden ist, wobei die Antriebsbaugruppe und die Getriebebaugruppe gegeneinander gerichtete Fügeabschnitte aufweisen und durch mindestens eine Fügeverbindung miteinander verbunden sind, ist erfindungsgemäß vorgesehen, dass die Antriebsbaugruppe und/oder die Getriebebaugruppe mindestens ein elastisches Spannelement aufweisen, zur Verspannung von Antriebsbaugruppe und Getriebebaugruppe im Bereich der Fügeverbindung, wobei das Spannelement ausgebildet ist, die Fügeabschnitte gegeneinander zu verspannen.

Ein erfindungsgemäßes Spannelement kann an der Antriebsbaugruppe oder der Getriebebaugruppe derart angebracht oder abgestützt sein, dass es eine elastische Spannkraft ausübt, welche die Antriebsbaugruppe und die Getriebebaugruppe im Bereich der Fügeverbindung gegeneinander belastet. Mit anderen Worten werden durch das Spannelement die miteinander zu fügenden Fügeabschnitte von Antriebs- und Getriebebaugruppe in einer Fügerichtung der Fügeverbindung, auch als Vorspannrichtung bezeichnet, zusammengepresst. Die Fügeabschnitte werden elastisch gegeneinander vorgespannt, wodurch die Antriebs- und die Getriebebaugruppe unabhängig von Maßtoleranzen im Bereich der Fügeverbindung spielfrei miteinander verklemmt werden. Dadurch wird die Fügeposition fixiert. Die gegeneinander vorgespannten Fügeabschnitte werden dabei in Kontakt miteinander gehalten. Die Fügeverbindung weist dabei die gewünschten Eigenschaften (Festigkeitseigenschaften) auf.

Bevorzugt ist die Fügeverbindung derart ausgebildet, dass diese in einem Crashfall, wenn ein Fahrzeugfrontalaufprall stattfindet und eine erhöhte Kraft in den Verstellantrieb eingetragen wird, unbeschädigt bleibt und die Fügeverbindung auch nach dem Crashfall intakt ist, so dass eine wirksame Abstützung im Crashfall erreicht wird und somit eine Energieabsorption mittels einer Energieabsorptionseinrichtung ermöglicht ist. Alternativ kann im Crashfall die Fügeverbindung bewusst aufgelöst werden, um die Antriebs- und Getriebebaugruppe in diesem Crashfall voneinander zu trennen und relativ zueinander zu verlagern.

Bevorzugt kann mit einem Fügeverfahren eine feste, bevorzugt unlösbare Fügeverbindung erzeugt werden. Dadurch kann die Herstellung der Fügeverbindung vereinfacht und optimiert werden. Beispielsweise können stoffschlüssige Fügeverfahren wie Schweißen oder Kleben, bei denen während des Fügevorgangs ein definierter Kontakt zwischen den Fügeabschnitten der Fügepartner aufrecht erhalten werden muss, optimiert angewendet werden. Der definierte Kontakt ist durch die Verspannung gewährleistet. Es kann vorgesehen sein, dass die Fügepartner durch eine von außen in Fügerichtung aufgebrachte Kraft gegeneinander zusammengepresst werden, auch um eventuell aufgrund vom Maßtoleranzen auftretende Spalte zwischen den Fügeabschnitten zu schließen. Alternativ kann durch einen gezielten Wärmeeintrag eine stoffschlüssige Fügeverbindung bereitgestellt werden, die ohne einen Schweißzusatzwerkstoff auskommt, also die Fügeverbindung zusatzwerkstofffrei gebildet ist. Dank der erfindungsgemäßen spielfreien internen elastischen Fixierung wird die Fügeverbindung in Fügerichtung auch nach Beendigung der Fügeoperation oder nach Wegfall der während der Fügeoperation von außen aufgebrachten Kraft spielfrei zusammen gehalten, so dass sich insbesondere eine zuverlässige und belastbare stoffschlüssige Verbindung ausbilden kann, beispielsweise durch Erstarren der Schmelze bei einer Schweißverbindung oder durch Aushärten des Klebers bei einer Klebeverbindung.

Unter Vorspannung ist eine Vorspannkraft oder Spannkraft zu verstehen.

Zur Bereitstellung einer besonders festen Verbindung kann es vorgesehen sein, dass die Antriebsbaugruppe und die Getriebebaugruppe gegeneinander gerichtete Fügeabschnitte aufweisen, und das Spannelement ausgebildet ist, die Fügeabschnitte gegeneinander zu verspannen. Die Vorspannung wird durch das Spannelement erzeugt. Die Fügeabschnitte können beispielsweise gebildet werden durch Flächenabschnitte, die als Fügeflächen bezeichnet werden und zumindest teilweise im Wesentlichen antiparallel gegeneinander gerichtete Normalenrichtungen haben. Beispielsweise kann eine Getriebebaugruppe zwischen mindestens einem Spannelement und einer Stützfläche der Antriebsbaugruppe eingeklemmt werden.

Es kann vorgesehen sein, dass eine Fügeverbindung an dem Spannelement angeordnet ist. Das Spannelement kann beispielsweise an der Antriebsbaugruppe angebracht sein und einen Fügeabschnitt aufweisen, mit dem es in Fügerichtung mit der Spannkraft elastisch gegen einen korrespondierenden Fügeabschnitt an der Getriebebaugruppe verspannt wird. Nach der Erzeugung der Fügeverbindung, beispielsweise einer unlösbaren stoffschlüssigen Schweiß- oder Klebeverbindung, sind die Antriebsbaugruppe und die Getriebebaugruppe über das Spannelement miteinander verbunden. Das Spannelement fungiert dann als Verbindungselement oder Verbindungsabschnitt zwischen Antriebs- und Getriebebaugruppe.

Es kann vorteilhaft sein, dass die Antriebsbaugruppe und die Getriebebaugruppe in einer quer zur Antriebsachse und/oder zur Getriebeachse stehenden Montagerichtung zusammengesetzt sind, wobei die Verspannung in eine Vorspannrichtung wirkt, die im Wesentlichen senkrecht zur Montagerichtung steht. Dadurch kann die Montage quer zu der von dem Spannelement in Vorspannrichtung/Fügerichtung ausgeübten Spannkraft erfolgen. Dies kann dadurch realisiert sein, dass die Fügeabschnitte im Wesentlichen parallel zur Montagerichtung erstrecken, beispielsweise als Fügeflächen, die parallel zu einer senkrecht zur Antriebsachse stehenden Fügefläche liegen. Vorteilhaft ist dabei, dass die zum Montieren in Montagerichtung ausgeübte Montagekraft entkoppelt sein kann von der quer dazu wirkenden Spannkraft, so dass beispielsweise eine Klemmung durch das Spannelement selbsttätig und ohne äußere Abstützung aufrecht erhalten werden kann, nachdem Antriebs- und Getriebebaugruppe beim Montieren relativ zueinander zum Fügen positioniert worden sind. Dadurch werden die Antriebs- und Getriebebaugruppe bis zur Fügeoperation in Position zueinander gehalten.

Unter "im Wesentlichen" wird stets eine Abweichung von ±10° gegenüber dem Idealzustand, also der idealen senkrechten oder parallelen Ausrichtung verstanden.

Das Spannelement kann als Federzunge ausgebildet sein. Die Federzunge bildet eine einseitig an der Antriebs- oder Getriebebaugruppe gehaltene Blattfeder, die mit ihrem federnd auslenkbaren, freien Ende die elastische Spannkraft ausüben kann. Am freien Endbereich der Blattfeder kann sich eine Fügeverbindung befinden, die einen Fügeabschnitt aufweist, der mit einem korrespondierenden Fügeabschnitt an der jeweils gegenüber angeordneten Getriebe- oder Antriebsbaugruppe verbunden wird, bevorzugt über eine feste, stoffschlüssige Verbindung.

Eine mögliche Weiterbildung ist, dass das Spannelement einstückig mit der Antriebsbaugruppe oder der Getriebebaugruppe ausgebildet ist. Beispielsweise kann das Spannelement durch einen einseitig angeschlossenen, streifen- oder zungenförmigen Fortsatz gebildet werden, der eine Feder, besonders bevorzugt eine integrale Blattfeder darstellt.

Eine Ausführung der Erfindung kann vorsehen, dass die Antriebsbaugruppe Befestigungsabschnitte aufweist, zwischen denen die Getriebebaugruppe aufgenommen ist. Zwischen den Befestigungsabschnitten wird ein konkaver, in der Montagerichtung offener Aufnahme- oder Koppelabschnitt gebildet, in dem die Getriebebaugruppe aufgenommen wird. Zur Montage wird die Getriebebaugruppe mit einem korrespondierenden Koppelabschnitt in Montagerichtung zwischen die Befestigungsabschnitte eingebracht. An zumindest einem der Befestigungsabschnitte kann bevorzugt mindestens ein Spannelement ausgebildet sein, welches in montiertem Zustand elastisch verformt ist, so dass es mit der Spannkraft auf die Getriebebaugruppe ausübt und die Getriebebaugruppe elastisch eingeklemmt ist.

Mindestens ein Spannelement kann bevorzugt an einem Befestigungsabschnitt angeordnet sein. Beispielsweise kann eine Federzunge - vorzugsweise einstückig - sich von dem Befestigungsabschnitt gegen die Montagerichtung erstrecken.

Zur Erzeugung einer Spannkraft durch das Spannelement ist es vorteilhaft, dass in der Fügeposition, dies ist die optimale Montageposition, in der eine relative Fixierung durch die Fügeverbindung erfolgt, das Spannelement beim Zusammensetzen von Antriebs- und Montagebaugruppe elastisch verformt und dadurch vorgespannt wird. Beispielsweise kann die Getriebebaugruppe quer zur Montagerichtung Übermaß zum Abstand der Spannelemente oder eines Spannelements zum Befestigungsabschnitt haben, so es dass das Spannelement elastisch aufspreizt bzw.aufweitet. Beispielsweise kann eine Federzunge an ihrem freien Ende federnd aufgebogen werden.

Die Fügeverbindung wird bevorzugt in einem elastisch gelagerten Fügeabschnitt eines Spannelements realisiert, wo es durch die in Fügerichtung, bevorzugt quer zur Montagerichtung wirkende Spannkraft gegen einen an der Getriebe- oder Antriebsbaugruppe gegenüberliegenden, korrespondierenden Fügeabschnitt angedrückt wird. Dadurch sind Getriebe- oder Antriebsbaugruppe zusammen geklemmt.

Die Antriebsbaugruppe kann ein Antriebsteilgehäuse aufweisen, in der das Antriebsrad gelagert ist, und die Getriebebaugruppe kann ein Getriebeteilgehäuse aufweisen, in der das Getrieberad gelagert ist, wobei das Antriebsteilgehäuse mit dem Getriebeteilgehäuse über die Fügeverbindung verbunden ist. Das Getriebeteilgehäuse kann als Verbindungs- oder Koppelabschnitt zumindest einen zur Getriebeachse koaxialen Rohrabschnitt aufweisen, der zumindest über einen Umfangsteilbereich von einem korrespondierenden Verbindungs- oder Koppelabschnitt dem Antriebsteilgehäuse umgriffen ist, beispielsweise zwischen vorstehenden Befestigungsabschnitten.

In dem bevorzugt hohlzylindrischen Rohrabschnitt kann das Getrieberad koaxial gelagert sein, und je nach Ausführung des Verstellantriebs mit der Gewindespindel oder der Spindelmutter drehfest verbunden sein, wobei die Getriebeachse mit der Gewindespindelachse zusammenfällt. Der Durchmesser des Rohrabschnitts ist angepasst, so dass dieser im Koppelabschnitt zwischen den Befestigungsabschnitten des Antriebsteilgehäuses aufnehmbar ist. Zwischen den Befestigungsabschnitten wird dabei eine Art rinnenförmiger, im Umfangsquerschnitt maximal halbkreisförmiger offener Querschnitt gebildet, in dem der Rohrabschnitt formschlüssig aufnehmbar ist. Durch Einsetzen des Rohrabschnitts in den rinnenförmigen Koppelabschnitt in der Montagerichtung kann Abstand radial zur Getriebeachse frei vorgegeben werden kann, wodurch erfindungsgemäß der relative Abstand zwischen Antriebs- und Getriebeachse zum Ausgleich von Toleranzen individuell eingestellt werden kann.

Mindestens ein Spannelement kann bevorzugt als Federzunge ausgebildet sein, die vorzugsweise einstückig an einem Befestigungsabschnitt realisiert sein kann, beispielsweise einfach durch einen geschlitzten Befestigungsabschnitt. Mit dem freien, elastisch federnd bewegbaren Ende steht das Spannelement in den offenen Querschnitt des rinnenförmigen Koppelabschnitts in Fügerichtung, quer zur Montagerichtung vor. Dadurch, dass der Rohrabschnitt in Fügerichtung gemessen Übermaß zum Abstand zwischen dem Spannelement und dem gegenüberliegenden Befestigungsabschnitt hat, wird das Spannelement vorgespannt und liegt mit einem Fügeabschnitt mit der Federkraft gegen einen korrespondierenden Fügeabschnitt des Rohrabschnitts an.

In der optimalen Position, in der sich Antriebs- und Getrieberad in optimalem Wirkeingriff befinden, wird das auf dem Rohrabschnitt sitzende Antriebsteilgehäuse durch Erzeugung der Fügeverbindung zwischen den Teilgehäusen fixiert. Die Fügeverbindung ist bevorzugt an dem Spannelement ausgebildet, beispielsweise im federnden freien Endbereich einer Federzunge.

Bevorzugt weist die Fügeverbindung eine unlösbare Verbindung auf. Eine unlösbare stoffschlüssige Verbindung kann beispielsweise mittels Schweißen oder Kleben erfolgen, vorteilhaft in Kombination mit einer formschlüssigen Verbindung. Beispielsweise können im Fügeabschnitt in Fügerichtung vorstehende Formschlusselemente ausgebildet sein, die beispielsweise in eine beim Schweißen lokal erzeugte Schmelze in Fügerichtung eintauchen, so dass die Formschlusselemente nach dem Aushärten unlösbar formschlüssig eingebettet sind. Die Fügeverbindung ist besonders belastbar, wenn die Formschusselemente bezüglich der Fügerichtung hinterschnitten ausgebildet sind.

Unter einer unlösbaren Verbindung wird eine Verbindung verstanden, die nicht zerstörungsfrei gelöst werden kann, sprich nur durch zerstörende Maßnahmen gelöst werden kann.

Es kann vorgesehen sein, dass zumindest im Bereich der Fügeverbindung die Antriebsbaugruppe einen thermoplastischen Kunststoff aufweist, und dass zumindest im Bereich der Fügeverbindung die Getriebebaugruppe einen metallischen Werkstoff aufweist. Die Fügeverbindung kann dann effizient und belastbar als thermische Verschweißung ausgeführt werden. Beispielsweise kann der metallische Werkstoff in einem Fügeabschnitt elektrisch aufgeheizt werden, beispielsweise induktiv. Hierzu kann ein Induktor zum Einsatz kommen, der mit einem elektrischen Strom derart beaufschlag wird, dass sich der metallische Werkstoff der Getriebebaugruppe zumindest lokal erwärmt. Die durch die erfindungsgemäß von einem Spannelement in Vorspannrichtung/Fügerichtung ausgeübte Spannkraft presst einen korrespondierenden Fügeabschnitt der Antriebsbaugruppe gegen den aufgeheizten metallischen Werkstoff, wobei der thermoplastische Kunststoff lokal aufgeschmolzen wird und dieser sich an den aufgeheizten metallischen Werkstoff der Getriebebaugruppe anschmiegt und eine unlösbare Verbindung zwischen der Antriebbaugruppe und der Getriebebaugruppe erzeugt wird, wobei nach dem Erkalten des thermoplastischen Kunststoff eine Vorspannung in Vorspannrichtung vorliegen kann. Da sich die Fügeabschnitte dank der Spannkraft an den aufgeheizten metallischen Werkstoff anschmiegen, wird diese Richtung, die Vorspannrichtung, in der sich die Spannelemente an den aufgeheizten metallischen Werkstoff anschmiegen, auch als Fügerichtung bezeichnet.

Bevorzugt dringt der lokal aufgeschmolzene thermoplastische Kunststoff der Antriebsbaugruppe in Ausnehmungen und/oder Hohlräume und/oder und/oder Rücksprünge und/oder Vertiefungen und/oder Mikrorauheiten der Getriebebaugruppe durch die Verspannung ein, so dass eine unlösbare Verbindung zwischen Antriebsbaugruppe und Getriebebaugruppe bereitgestellt ist.

Dank des erfindungsgemäßen Spannelementes ist die Verbindung spielfrei auch bei unterschiedlichen Temperaturen, somit wird dank des erfindungsgemäßen Spannelements unterschiedliche Wärmeausdehnung auf Grund unterschiedlicher Wärmeausdehnungskoeffizienten von Antriebsbaugruppe und Getriebebaugruppe auf Grund der genannten Materialwahl ausgeglichen.

Bevorzugt ist bei der Fügeoperation, also beispielsweise beim zumindest lokalen Erwärmen der Getriebebaugruppe, kein zusätzliches Anpresswerkzeug erforderlich, da die Spannkraft durch das Spannelement selbst bereitgestellt wird.

Bevorzugt ist für die thermische Verschweißung kein Schweißzusatzwerkstoff erforderlich, mit anderen Worten ist die thermische Verschweißung schweißzusatzwerkstofffrei.

Unter Schweißen ist auch lokales thermisches Aufschmelzen zu verstehen, bei dem der Werkstoff der einen Baugruppe (beispielsweise die Antriebsbaugruppe) thermisch derart erwärmt wird, dass dieser die Geometrie der anderen Baugruppe (beispielsweise die Getriebebaugruppe) umfliesst und nach dem Erkalten eine feste Verbindung bereitstellt.

Alternativ oder zusätzlich kann die zum lokalen Aufschmelzen erforderliche Wärme von au-ßen durch einen Schweißstempel eingebracht werden. Alternativ ist eine Ultraschall-Verschweißung denkbar und möglich. Nach dem Abkühlen bildet sich eine stoffschlüssige, unlösbare Fügeverbindung zwischen Metall und Kunststoff. An dem metallischen Fügeabschnitt können Formschlusselemente vorgesehen sein, die bevorzugt in Fügerichtung vorstehen und hinterschnitten sind, welche in den beim Schweißen aufgeschmolzenen Kunststoff unlösbar eingebettet werden. Die erfindungsgemäß durch das mindestens eine Spannelement aufgebrachte Spannkraft sorgt dafür, dass Antriebs- und Getriebebaugruppe beim Erzeugen der Fügeverbindung relativ zueinander in Position gehalten werden, und die Fügeabschnitte während des gesamten Fügeprozesses in Kontakt bleiben, so dass reproduzierbar eine belastbare Schweißverbindung erzeugt wird. Durch die Anordnung mindestens eines Fügeabschnitts an dem elastisch verformbaren Spannelement können dabei toleranzbedingte Maßabweichungen ausgeglichen werden, so dass der Fertigungsaufwand reduziert werden kann.

Die Erfindung umfasst eine Antriebseinheit für einen Verstellantrieb, mit einem Getriebe, in dem ein um eine Antriebsachse drehend antreibbares Antriebsrad gelagert ist, welches in Wirkeingriff steht mit einem Getrieberad, welches um eine Getriebeachse drehbar in dem Getriebe gelagert ist, wobei das Getriebe zusammengesetzt ist aus einer Antriebsbaugruppe, die das Antriebsrad aufweist, und einer Getriebebaugruppe, die das Getrieberad aufweist, wobei die Antriebsbaugruppe und die Getriebebaugruppe gegeneinander gerichtete Fügeabschnitte aufweisen und durch eine Fügeverbindung miteinander verbunden sind. Die Antriebsbaugruppe und/oder die Getriebebaugruppe weisen erfindungsgemäß mindestens ein elastisches Spannelement auf, zur Verspannung von Antriebsbaugruppe und Getriebebaugruppe im Bereich der Fügeverbindung, wobei das Spannelement ausgebildet ist, die Fügeabschnitte gegeneinander zu verspannen.

Die Antriebseinheit dient dem rotatorischen Antrieb des Spindeltriebs, und kann die vorangehend für die erfindungsgemäße Verstelleinheit beschriebenen Merkmale einzeln oder in Kombination aufweisen.

Weiterhin betrifft die Erfindung eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel aufweist. Der Verstellantrieb kann erfindungsgemäß bei der Lenksäule ausgebildet sein, wie vorangehend beschrieben.

Ein erfindungsgemäßer Verstellantrieb für eine motorisch verstellbare Lenksäule für ein Kraftfahrzeug, kann in einem erfindungsgemäßen Verfahren mit den folgenden Schritten hergestellt werden:
- Bereitstellen einer Antriebsbaugruppe, mit einem darin um eine Antriebsachse drehbar gelagerten Antriebsrad,
- Bereitstellen einer Getriebebaugruppe, mit einem darin um eine Getriebeachse drehbar gelagerten Getrieberad,
- Positionieren von Antriebsbaugruppe und Getriebebaugruppe relativ zueinander in Eingriffsposition in einer Montagerichtung, so dass das Antriebsrad und Getrieberad in Wirkeingriff gebracht werden, wobei die Antriebsbaugruppe und die Getriebebaugruppe durch mindestens ein Spannelement im Bereich der Fügeverbindung in einer Vorspannrichtung quer zur Montagerichtung elastisch miteinander verspannt werden,
- Erzeugen einer festen Fügeverbindung in der Vorspannrichtung zum relativen Fixieren von Antriebsbaugruppe und Getriebebaugruppe.

Eine Antriebsbaugruppe kann zunächst separat gefertigt werden, wobei das Antriebsrad, beispielsweise eine Schnecke, definiert positioniert ist, beispielsweise durch eine oder mehrere Lagerungen der Antriebswelle, hier der Schneckenwelle. Die Lagerung kann in einem Antriebsteilgehäuse der Antriebsbaugruppe erfolgen, bevorzugt vom Stellmotor aus gesehen am motorfernen Wellenende, und am motornahen Ende ebenfalls in einer Lagerung im Antriebsteilgehäuse, oder in einer Motorlagerung des Stellmotors, der an dem Antriebsteilgehäuse fixiert ist. Das Getrieberad ist um die Getriebeachse, welche mit der Gewindespindelachse zusammenfällt, drehbar in einem Getriebeteilgehäuse der Getriebebaugruppe gelagert.

Im nächsten Fertigungsschritt werden die Antriebs- und das Getriebebaugruppe in der Montagerichtung - quer zur Antriebs- und Getriebeachse - so relativ zueinander positioniert, dass das Antriebsrad und das Getrieberad miteinander in Wirkeingriff kommen, wobei in dem genannten Beispiel die Schnecke mit dem Schneckenrad kämmt. Dabei wird der Achsabstand von Antriebs- und Getriebeachse auf optimales Getriebespiel eingestellt, wobei Fertigungs- und Maßtoleranzen von Antriebs- und Getrieberad sowie der Lagerungen ausgeglichen werden können. Der Abstand kann beispielsweise optimiert werden, indem während der relativen Positionierung von Antriebs- und Getriebeteilgehäuse das Spiel zwischen den Zahnflanken überwacht wird, und/oder die Kraft auf den Zahneingriff in Richtung des Achsabstands gemessen wird. Dadurch erfolgt eine individuelle Positionierung des Antriebsrads zum Getrieberad für bei der Fertigung jedes einzelnen Getriebes, bei der individuelle Toleranzen berücksichtigt und kompensiert werden können. Ebenfalls ist es denkbar und möglich, bei der Positionierung des Antriebs- und des Getriebeteilgehäuses zueinander das Antriebsrad und Getrieberad anzutreifen und den Wirkungsgrad zu bestimmen, wobei die Positionierung eine optimale Position aufweist, wenn der Wirkungsgrad den höchsten Wert erreicht hat. In dieser Position werden dann das Antriebs- und das Getriebeteilgehäuse relativ zueinander fixiert. Weiterhin kann es zusätzlich oder alternativ vorgesehen sein, dass der Körperschall bei der Positionierung und dem Betrieb des Getriebes gemessen wird. Wenn der Körperschall unterhalb eines vorgegebenen Grenzwertes liegt, erfolgt die Fixierung Antriebs- und des Getriebeteilgehäuses zueinander. Somit kann ein besonders geräuscharmer Betrieb erreicht werden.

Bei Positionieren in Montagerichtung werden Antriebs- und Getriebebaugruppe durch das mindestens eine Spannelement elastisch miteinander verklemmt. Beispielsweise wird das an der Antriebsbaugruppe angebrachte Spannelement beim Zusammensetzen von Antriebs- und Getriebebaugruppe quer zur Montagerichtung, in Vorspannrichtung/Fügerichtung elastisch abgespreizt. Dadurch übt das Spannelement eine Spannkraft aus, die einen bevorzugt am Spannelement angeordneten Fügeabschnitt in Fügerichtung gegen einen an der Getriebebaugruppe angeordneten, korrespondierenden Fügeabschnitt andrückt.

Wenn die optimale relative Positionierung von Antriebs- und Getrieberad ermittelt und eingestellt ist, werden in die Antriebs- und Getriebebaugruppe durch Erzeugen der Fügeverbindung zwischen Antriebs- und Getriebeteilgehäuse miteinander fixiert. Während der Erzeugung der Fügeverbindung, beispielsweise durch Verschweißen, sorgt die erfindungsgemäß aufgebrachte Spannkraft für einen besonders sicheren, reproduzierbaren Fügeprozess, wie weiter oben beschrieben.

Zum Fixieren von Antriebsbaugruppe und Getriebebaugruppe kann bevorzugt an einem Spannelement eine Fügeverbindung des Antriebsteilgehäuses mit dem Getriebeteilgehäuse erzeugt werden, wie vorangehend beschrieben.

Bevorzugt erfolgt das Erzeugen der festen Fügeverbindung mittels lokalem Aufschmelzen, beispielsweise durch Induktion, des Spannelements. Dazu kann das Spannelement des Antriebsteilgehäuses bevorzugt zumindest teilweise aus einem thermoplastischen Kunststoff gebildet sein und das Getriebeteilgehäuse zumindest im Bereich der Fügeverbindung aus einem metallischen Werkstoff, bevorzugt Stahl, gebildet sein.

Das Antriebs- und das Getrieberad werden in optimalem Achsabstand und entsprechend in optimalem Wirkeingriff fixiert. Dadurch ist ein geräusch- und verschleißarmer Lauf des Getriebes über seine Lebensdauer gewährleistet, ohne dass zusätzliche Einrichtungen zum Ausgleich von Maßtoleranzen erforderlich wären.

Durch das erfindungsgemäße Verfahren kann ein Verstellantrieb mit den vorangehend beschriebenen Merkmalen sowie eine Antriebseinheit für einen derartigen Verstellantrieb und eine Lenksäule umfassend mindestens einen derartigen Verstellantrieb hergestellt werden.

Es wird ein modularer Aufbau des Getriebes vorgeschlagen, bei dem die Antriebsbaugruppe und die Getriebebaugruppe funktionale Module bilden, die zur Erzeugung des Wirkeingriffs von Antriebsrad und Getrieberad zusammengefügt werden. Ein besonderer Vorteil ergibt sich daraus, dass die beiden Baugruppen - Antriebsbaugruppe und Getriebebaugruppe - zunächst separat gefertigt und bereitgestellt werden können. Die separat vorliegenden Baugruppen sind ausgestaltet, dass die miteinander gefügt werden können, und zu diesem Zweck beispielsweise miteinander korrespondierende Fügeelemente aufweisen, beispielsweise Fügeflächen. Anschließend werden die Baugruppen zur Bildung des Getriebes miteinander verbunden. Dabei werden die Baugruppen zunächst relativ zueinander positioniert, so dass das Antriebsrad der Antriebsbaugruppe in Wirkeingriff kommt mit dem Getrieberad der Getriebebaugruppe. Während dieser Positionierung erfolgt eine optimierte Orientierung und Ausrichtung, so dass die Getriebeglieder Antriebsrad und Getrieberad unter Ausgleich von fertigungsbedingten Maßtoleranzen miteinander in Eingriff gebracht werden. Dadurch, dass diese Positionierung der Getriebeglieder für jedes einzelne Getriebe individuell erfolgen kann, ist es möglich, selbst geringste Abweichungen von Maß- und/oder Orientierung der Getriebeglieder und deren Lagerungen zu berücksichtigen und auszugleichen. Wenn die optimale Ausrichtung erfolgt ist, werden Antriebsbaugruppe und Getriebebaugruppe durch die Fügeverbindung positionsgenau miteinander fixiert.

Ein besonderer Vorteil des aus modulartigen Baugruppen erzeugten Getriebes ist, dass selbst geringste Maßabweichungen, die insbesondere beim Wirkeingriff von Getrieberädern zu unerwünschter Geräuschbildung und erhöhtem Verschleiß führen können, während der Fertigung des Getriebes bei der Erzeugung der Fügeverbindung wirksam kompensiert werden können. Dadurch kann eine verbesserte Laufruhe und ein verringerter Verschleiß erreicht werden. Ein weiterer Vorteil ist, dass die Toleranzanforderungen an die einzelnen Getriebeglieder - Antriebsrad, Getrieberad und deren Lagerungen - geringer ausfallen können. Im Ergebnis hat ein aus gefügten modulartigen Baugruppen gebautes Getriebe bessere Betriebseigenschaften als konventionelle, integrierte Getriebe, und erfordert einen geringeren Fertigungs- und Montageaufwand.

Es ist möglich, dass die Antriebsbaugruppe ein Antriebsteilgehäuse aufweist, in der das Antriebsrad gelagert ist, und die Getriebebaugruppe ein Getriebeteilgehäuse aufweist, in der das Getrieberad gelagert ist, und das Antriebsteilgehäuse mit dem Getriebeteilgehäuse über die Fügeverbindung verbunden ist. Die beiden Teilgehäuse - Antriebsteilgehäuse und Getriebeteilgehäuse - weisen jeweils zumindest ein Getriebeglied - Antriebsrad oder Getrieberad - und deren jeweilige Lager zur drehbaren Lagerung um die Antriebs- oder Getriebeachse auf. Durch entsprechende, miteinander korrespondierende Ausnehmungen oder Öffnungen in den Teilgehäusen können Antriebs- und Getrieberad miteinander in Wirkeingriff gebracht werden, beispielsweise durch den gegenseitigen Eingriff von Verzahnungen. Auf diese Weise ist es möglich, die durch die Lager definierten Antriebs- und Getriebeachsen durch relative Positionierung von Antriebs- und Getriebeteilgehäuse für jedes einzelne Getriebe individuell relativ zueinander zu orientieren und im optimalen Achsabstand anzuordnen, so dass der Wirkeingriff von Antriebsrad und Getrieberad optimiert wird. Nach dem Fügen der Teilgehäuse sind Antriebs- und Getrieberad positionsfest fixiert, so dass der optimierte Wirkeingriff der Getriebeglieder über die Betriebsdauer des Getriebes sichergestellt ist.

Bevorzugt ist das Antriebsteilgehäuse, welches das erfindungsgemäße Spannelement umfasst, aus einem thermoplastischen Kunststoff gebildet. Bevorzugt ist das Getriebeteilgehäuse, aus einem metallischen Werkstoff gebildet.

Dank des erfindungsgemäßen Spannelementes ist die Verbindung zwischen Antriebs- und Getriebeteilgehäuse spielfrei auch bei unterschiedlichen Temperaturen, somit wird dank des erfindungsgemäßen Spannelements eine unterschiedliche Wärmeausdehnung auf Grund unterschiedlicher Wärmeausdehnungskoeffizienten von Antriebs- und Getriebeteilgehäuse auf Grund anderer Materialien ausgeglichen.

Die Teilgehäuse mit den darin angeordneten Lagern und Getriebegliedern können als modulartige Baueinheiten gefertigt und bereitgestellt werden, welche zumindest teilweise die Antriebsbaugruppe und die Getriebebaugruppe bilden. Beispielsweise kann ein Antriebsteilgehäuse ein Antriebsrad, beispielsweise in Form einer Schnecke, und ein Antriebsradlager aufweisen, und ein Getriebeteilgehäuse ein Getrieberad, beispielsweise in Form eines Schneckenrads, und ein Getrieberadlager aufweisen. Durch das positionsgenaue Fügen von Antriebs- und Getriebeteilgehäuse zur Bildung des Getriebegehäuses sind das Antriebs- und das Getrieberad optimal im Wirkeingriff zueinander ausgerichtet.

Um die Wirkverbindung zwischen den Getriebegliedern beim Verbinden der Teilgehäuse zu erzeugen, kann vorgesehen sein, dass das Antriebsteilgehäuse im Bereich des Antriebsrads und das Getriebeteilgehäuse im Bereich des Getrieberads einen offenen Eingriffsbereich aufweisen, wobei das Antriebsrad und das Getrieberad durch den Eingriffsbereich hindurch miteinander in Wirkeingriff stehen. Das Antriebsteilgehäuse hat einen zum Getriebeteilgehäuse hin offenen Eingriffsbereich und umgekehrt, d.h. im Eingriffsbereich besteht in zusammengefügten Zustand ein offener Durchgang zwischen den Teilgehäusen. Beispielsweise steht das als Schnecke ausgebildetes Antriebsrad im Eingriffsbereich aus dem Antriebsteilgehäuse vor und taucht durch den Eingriffsbereich in das Getriebeteilgehäuse ein, wo es mit der Verzahnung des als Schneckenrad ausgebildeten Getrieberads kämmt.

Es ist vorteilhaft, dass die Antriebsbaugruppe und die Getriebebaugruppe korrespondierende Fügeelemente aufweisen. An den Fügeelementen werden die Antriebsbaugruppe und die Getriebebaugruppe miteinander verbunden und gegenseitig fixiert, wobei diese Fixierelemente die Spannelemente bilden können. Die Fügeelemente können beispielsweise Formschlusselemente umfassen, welche eine eindeutige Orientierung der Baugruppen in einer oder mehreren Raumrichtungen ermöglichen. Weiterhin ist es vorteilhaft, dass die Fügeelemente Freiheitsgrade bezüglich der relativen Positionierung bieten, beispielsweise durch Führungsflächen und/oder -kanten, welche eine Führung oder Abstützung in mindestens einer Raumrichtung ermöglichen, während beispielsweise eine relative Verschiebung oder Verlagerung von Antriebs- und Getriebebaugruppe in mindestens einer anderen Raumrichtung möglich ist, um beispielsweise den Achsabstand zwischen Antriebs- und Getrieberad einzustellen.

Die Fügeelemente können hinsichtlich Anordnung, Formgebung, Material, Oberflächenstruktur und dergleichen für spezielle Arten von Fügeverbindungen ausgebildet sein. Beispielsweise können Schweißvorbereitungen mit Materialanordnungen zur optimierten Erzeugung einer Schweißverbindung vorgesehen sein, oder strukturierte Oberflächen zur Herstellung stoffschlüssiger Verbindungen mittels Kleben oder Löten, oder es können Aufnahmen für Verbindungselemente wie Schrauben, Nieten oder dergleichen vorgesehen sein. Vorzugsweise sind die Fügeelemente an dem Antriebsteilgehäuse und/oder dem Getriebeteilgehäuse angeordnet und ermöglichen das Positionieren und Zusammenfügen von Antriebs- und Getriebebaugruppe.

Die Fügeverbindung kenn eine formschlüssige und/oder kraftschlüssige und/oder stoffschlüssige Verbindung aufweisen. Es kann eine unlösbare Verbindung erfolgen, beispielsweise durch stoffschlüssig durch Schweißen, Ultraschallschweißen, Kleben, oder auch formschlüssig durch Nieten, Falzen, Bördeln, Durchsetzfügen oder Verstemmen. Zusätzlich oder alternativ kann eine lösbare Verbindung erfolgen, beispielsweise durch Schrauben.

Eine vorteilhafte Ausführungsform sieht vor, dass das Getriebeteilgehäuse zumindest einen bevorzugt zylindrischen, zur Getriebeachse koaxialen Rohrabschnitt aufweist, der zumindest über einen Umfangsteilbereich von dem Antriebsteilgehäuse umgriffen ist.

Es kann vorgesehen sein, dass das Antriebsrad koaxial mit der Motorwelle eines Stellmotors gekuppelt ist und das Getrieberad mit einer Gewindespindel oder einer Spindelmutter verbunden ist. Das Antriebsrad kann beispielsweise auf der Motorwelle angeordnet sein, oder auf einer mit der Motorwelle gekuppelten Antriebswelle. Die Motorwelle oder die Antriebswelle kann motorseitig in dem Motor oder in mindestens einem Lager im Antriebsteilgehäuse gelagert sein, und an ihrem motorfernen Ende in einem Lager im Antriebsteilgehäuse, so dass eine definierte Orientierung in der Antriebsbaugruppe erfolgt.

Der Stellmotor kann positionsfest mit der Antriebsbaugruppe verbunden sein, bevorzugt indem der Stellmotor an dem Antriebsteilgehäuse angebracht ist, beispielsweise mittels einer Flanschverbindung, wobei Vorsprünge des Antriebsteilgehäuses durch Ausnehmungen des Stellmotors hindurchragen und mittels einer Heißverstemmoperation derart verformt werden, dass eine unlösbare Verbindung bereitgestellt ist.

Eine Ausführung der Erfindung sieht vor, dass die Antriebsachse und die Getriebeachse im Wesentlichen senkrecht zueinander stehen und einen Abstand voneinander haben, der durch den Achsabstand von Antriebsrad und Getrieberad im Wirkeingriff vorgegeben ist. Unter im Wesentlichen senkrecht ist eine Abweichung bis zu ±10° von einer idealen senkrechten Anordnung zu verstehen. Bei Zahnrädern ist dies die Summe der Teilkreisradien. Bei einer Ausführung als Schneckenradgetriebe bestimmt sich der Achsabstand aus dem Teilkreisradius des Schneckenrades und dem Mittenkreisradius der Schnecke. Dadurch, dass die Antriebsachse durch eine in der Antriebsbaugruppe angeordnete Lagerung und die Getriebeachse durch eine in der Getriebebaugruppe angeordnete Lagerung definiert sind, können durch die erfindungsgemäße Fügeverbindung der Baugruppen bei optimaler Ausrichtung Antriebsrad und Getrieberad in individuell optimiertem Wirkeingriff fixiert werden.

Die vorgenannte Ausführungsform kann dadurch realisiert werden, dass das Antriebsrad als Schnecke und das Getrieberad als Schneckenrad ausgebildet ist. Die Schnecke ist als Bestandteil der Antriebsbaugruppe bevorzugt in einem Antriebsteilgehäuse gelagert. Die Lagerung kann in mindestens einem in dem Antriebsteilgehäuse angeordneten Wellenlager erfolgen, und/oder in einem Motorlager des Stellmotors, der mit dem Antriebsteilgehäuse verbunden ist. Das Schneckenrad ist in dem Getriebeteilgehäuse gelagert. Das Antriebs- und Getriebeteilgehäuse haben korrespondierende Eingriffsöffnungen, durch die die Schnecke mit dem Schneckenrad in kämmenden Wirkeingriff gebracht werden können.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: ein Verstellantrieb der Lenksäule gemäß Figuren 1 und 2,
- Figur 4: der Verstellantrieb gemäß Figur 3 in auseinander gezogenem Zustand,
- Figur 5: eine Detailansicht der Getriebebaugruppe des Verstellantriebs gemäß Figur 4,
- Figur 6: eine Seitenansicht des Verstellantriebs gemäß Figur 3
- Figur 7: eine Ansicht auf einen Verstellantrieb gemäß Figur 3 in Richtung der Getriebeachse vor der Montage,
- Figur 8: eine Ansicht auf einen Verstellantrieb wie in Figur 7 nach der Montage,

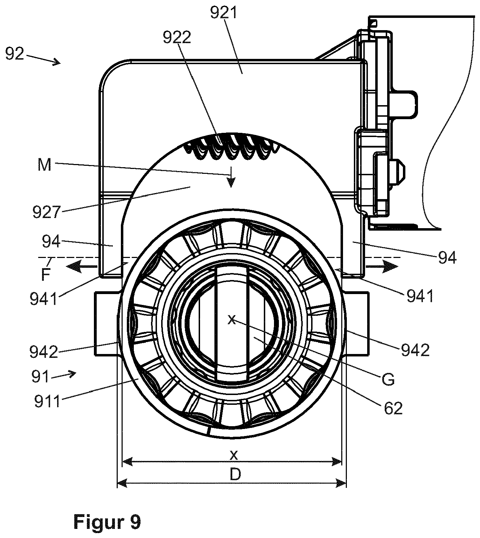

- Figur 9: ein Verstellantrieb in einer weiteren Ausführung in einer Ansicht wie in Figur 7.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

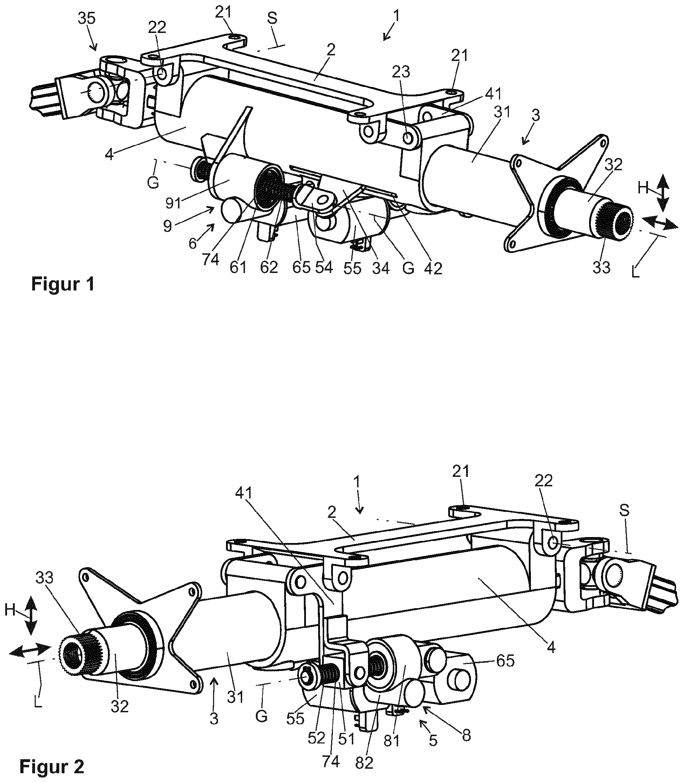

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist. Am vorderen Ende ist die Lenkspindel 32 mit einer Gabel eines Universalgelenks 35 drehmomentschlüssig verbunden.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist in ihrem vorderen Endbereich um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen drehbaren Stellhebel 41 mit der Trageinheit 2 verbunden. Durch eine Drehbewegung des Stellhebels 41 mittels eines dargestellten Stellantriebs 5 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 6 zur Längsverstellung der Stelleinheit 3 relativ zur Manteleinheit 4 in Richtung der Längsachse L weist einen Spindeltrieb mit einer Spindelmutter 61 mit einem Innengewinde 74 auf, in das eine sich längs einer Gewindespindelachse G erstreckende Gewindespindel 62 eingreift, also mit ihrem Außengewinde in das korrespondierende Innengewinde 74 der Spindelmutter 61 eingeschraubt ist. Die Gewindespindelachse G der Gewindespindel 62 verläuft im Wesentlichen parallel zur Längsachse L.

Die Spindelmutter 61 ist um die Gewindespindelachse G in einem Getriebe 8 drehbar in einem Getriebegehäuse 91 gelagert, welches fest mit der Manteleinheit 4 verbunden ist. In Richtung der Gewindespindelachse G, die im Folgenden auch gleichbedeutend als Getriebeachse G bezeichnet wird, ist die Spindelmutter 61 axial über das Getriebegehäuse 91 an der Manteleinheit 4 abgestützt.

Die Gewindespindel 62 ist mit einem an ihrem hinteren Ende ausgebildeten Befestigungselement 54 über ein Übertragungselement 34 mit der Stelleinheit 3 verbunden, und zwar fest in Richtung der Gewindespindelachse G bzw. der Längsachse L und feststehend bezüglich Drehung um die Gewindespindelachse G. Durch die drehend antreibbare Spindelmutter 61 und die bezüglich Drehung feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der als Tauchspindelantrieb ausgebildete Verstellantrieb 6 weist einen elektrischen Stellmotor 65 auf, von dem die Spindelmutter 61 bezüglich der Gewindespindelachse G relativ zur feststehenden Gewindespindel 62 drehend antreibbar ist. Dadurch kann - je nach Drehrichtung des Stellmotors 65 - die Gewindespindel 62 in Richtung der Achse G translatorisch relativ zur Spindelmutter 61 verlagert werden, so dass entsprechend die mit der Gewindespindel 52 verbundene Stelleinrichtung 3 relativ zu der mit der Spindelmutter 61 verbundenen Manteleinheit 4 in Richtung der Längsachse L verstellt wird. Der Antrieb der Spindelmutter 61 wird weiter unten noch detailliert erläutert.

In Figur 2, welche eine perspektivische Ansicht der Lenksäule 1 von der in Figur 1 hinten liegenden Seite zeigt, ist erkennbar, wie ein zweiter Verstellantrieb 5 zur Verstellung in Höhenrichtung H an der Lenksäule 1 angebracht ist. Dieser Verstellantrieb 5 umfasst eine Spindelmutter 51, in deren Innengewinde 74 längs einer Gewindespindelachse G eine Gewindespindel 52 eingreift. Der Verstellantrieb weist ein Getriebe auf, in dem die Gewindespindel 52 in einem Getriebegehäuse 81, welches an der Manteleinheit 4 befestigt ist, um die Gewindespindelachse G, die gleichbedeutend als Getriebeachse G bezeichnet wird, drehbar gelagert und axial, in Richtung der Gewindespindelachse G, an der Manteleinheit 4 abgestützt ist. Von einem elektrischen Stellmotor 55 ist die Gewindespindel 52 wahlweise in beide Rotationsrichtungen um die Gewindespindelachse G drehend antreibbar.

Die Spindelmutter 51 ist bezüglich einer Drehung um die Gewindespindelachse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 51 kann - je nach Drehrichtung des Stellmotors 55 - die Spindelmutter 51 in Richtung der Gewindespindelachse G translatorisch relativ zur Gewindespindel 52 verlagert werden, so dass entsprechend die über den Stellhebel 41 mit der Spindelmutter 51 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

Durch die drehend antreibbare Gewindespindel 52 und die bezüglich Drehung feststehende Spindelmutter 51 wird ein sogenannter Rotationsspindelantrieb realisiert.

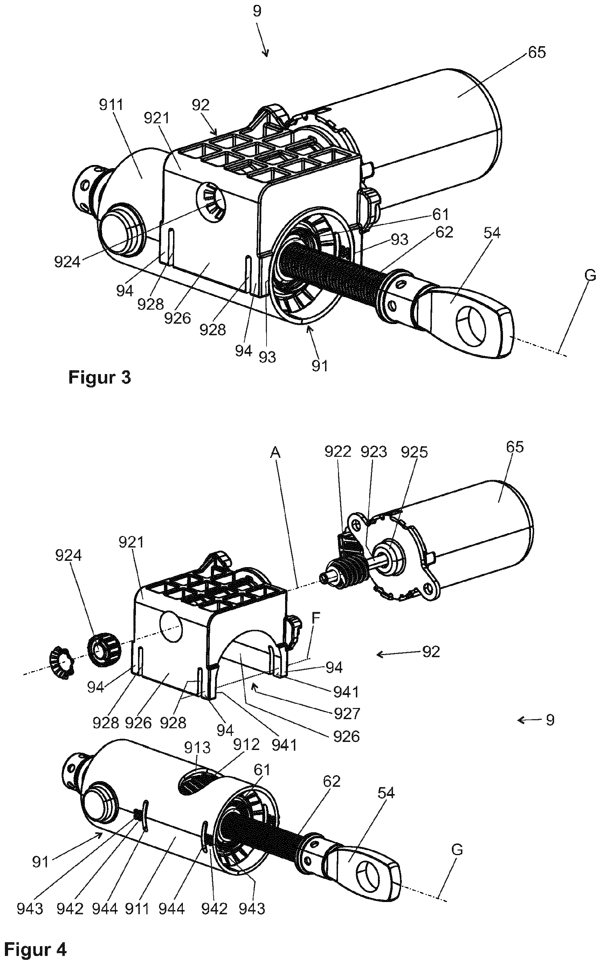

Die Erfindung bezieht sich im dargestellten Beispiel auf die Ausbildung eines Getriebegehäuses 8 oder 9, wobei diese sich im Wesentlichen nur dadurch unterscheiden, dass in dem Getriebegehäuse 8 die Gewindespindel 52 um die jeweilige Gewindespindelachse G drehbar, in axialer Richtung fest gelagert ist, und in dem Getriebegehäuse 9 die Spindelmutter 61. Im Folgenden werden anhand der Figuren 3 bis 8 exemplarisch Ausführungen des Getriebegehäuses 9 des als Tauchspindelantriebsausgebildeten Verstellantriebs 6 erläutert, wobei die Merkmale auf die Ausgestaltung eines Getriebegehäuses 8 für einen als Rotationsspindelantriebs ausgebildeten Verstellantrieb 5 dadurch übertragen werden können, dass anstatt der Gewindespindel 62 die Spindelmutter 51 drehend antreibbar angeordnet wird. Mit anderen Worten ist die Art des Verstellantriebs nicht untrennbar mit der Ausgestaltung des Getriebegehäuses verknüpft.

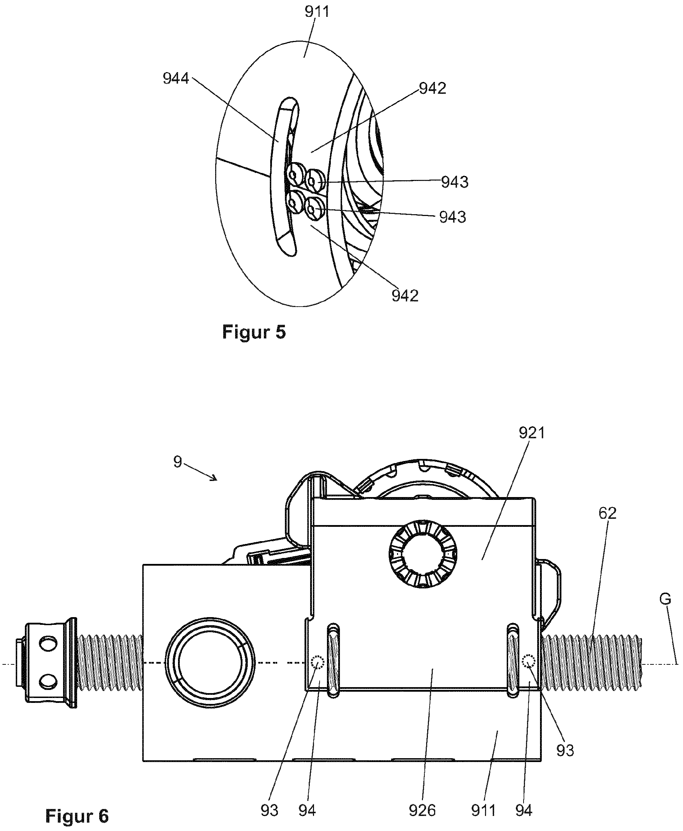

Figur 3 zeigt die von den Verstellantrieb 6 in zusammengesetzten Zustand. In Figur 4 sind die wesentlichen Funktionsteile in einer Explosionsdarstellung auseinander gezogen gezeigt. Figur 5 zeigt eine vergrößerte Detailansicht von Figur 4. Figur 6 zeigt eine Seitenansicht quer zur Getriebeachse G.

Das Getriebegehäuse 91 des Getriebes 9 ist erfindungsgemäß zusammengefügt aus einer Antriebsbaugruppe 92 und einer Getriebebaugruppe 91.

Die Antriebsbaugruppe 92 weist ein Antriebsteilgehäuse 921 auf, in der ein als Schnecke 922 ausgebildetes Antriebsrad drehbar gelagert ist, welche auf einer Antriebswelle 923 befestigt ist, die sich in Richtung einer Antriebsachse A erstreckt. Die Schnecke 922 ist bevorzugt mittels eines Querpressverbandes auf der Antriebswelle 923 befestigt. Dies bietet den Vorteil, dass keine hohen Aufpresskräfte wie bei einem Längspressverband erforderlich sind. Bevorzugt wird die Schnecke 922 vor der Fügeoperation induktiv erwärmt und dann unter geringer Kraftaufbringung auf die Antriebswelle 923 aufgeschoben, so dass die Schnecke 922 nach dem Erkalten auf der Antriebswelle 923 aufgeschrumpft ist. Die Antriebswelle 923 ist von dem Stellmotor 65 drehend antreibbar, wobei dessen Motorwelle die Antriebswelle 923 bilden kann oder zumindest drehmomentschlüssig mit dieser gekuppelt ist. Der Stellmotor 65 ist an das Antriebsteilgehäuse 921 angeflanscht und mit diesem verbunden, wobei die Antriebswelle 923 an ihrem motorfernen Ende in einem Lager 924 in dem Antriebsteilgehäuse 921 drehbar gelagert ist, und in ihrem motornahen Bereich in einem Motorlager 925, welches zusammen mit dem Stellmotor 65 ebenfalls in dem Antriebsteilgehäuse 921 fixiert ist.

Die Getriebebaugruppe 91 weist ein rohrförmiges Getriebeteilgehäuse 911 auf, welches hohlzylindrisch koaxial zur Getriebeachse G ausgebildet ist und in dem ein als Schneckenrad 912 ausgebildetes Getrieberad um die Getriebeachse G drehbar gelagert ist. Das Schneckenrad 912 ist mit der Gewindespindel 62 drehfest verbunden. Wie in Figur 4 erkennbar ist, weist das Getriebeteilgehäuse 911 im Bereich des Schneckenrads 912 eine Eingriffsöffnung 913 auf.

Das Antriebsteilgehäuse 921 weist Befestigungsabschnitte 926 auf, die an einem zumindest teilweise hohlzylindrischen Aufnahmebereich 927 angeordnet sind und sich bezüglich der Getriebeachse G in einer Vorspannrichtung bzw. Fügerichtung F gegenüberliegen. Der zwischen den Befestigungsabschnitten 926 gebildetete Aufnahmebereich 927 hat in etwa die Form einer sich in Richtung der Getriebeachse G erstreckenden Rinne mit halbkreisförmigem offenen Querschnitt, der zur formschlüssigen Aufnahme des außen zylindrischen Getriebeteilgehäuses 911 ausgestaltet ist.

Die Antriebsbaugruppe 92 ist über Fügeverbindungen 93 mit der Getriebebaugruppe 91 verbunden, die in dem gezeigten Beispiel als Verschweißungen ausgeführt sind.

Zumindest im Bereich der Fügeverbindung 93 ist die Antriebsbaugruppe 92 aus einem thermoplastischen Kunststoff ausgebildet, beispielsweise kann das Antriebsteilgehäuse 921 als Kunststoff-Spritzgussteil aus einem thermoplastischem Kunststoff gefertigt sein. Das Getriebeteilgehäuse 911 der Getriebebaugruppe 91 kann bevorzugt aus einem metallischen Werkstoff ausgebildet sein, beispielsweise aus Stahl.

Die Antriebsbaugruppe 92 weist insgesamt vier Spannelemente 94 auf, die als elastische Federzungen ausgebildet sind. Auf ihrer dem Getriebeteilgehäuse 911 zugewandten Innenseite weisen die Spannelemente 94 in ihrem freien, federelastischen Endbereich Fügeabschnitte 941 auf. Die Spannelemente 94 sind einstückig mit dem Antriebsteilgehäuse 921 durch Schlitze 928 in den Befestigungsabschnitten 926 ausgebildet.

Mit den Fügeabschnitten 941 liegen die Spannelemente 94 in der Fügerichtung F, die quer zur Getriebeachse G liegt, korrespondierenden Fügeabschnitten 942 außen am Getriebeteilgehäuse 911 gegenüber. Im Bereich der Fügeabschnitte 942 sind entgegen der Fügerichtung F nach außen vorstehende, bevorzugt bezüglich der Fügerichtung F hinterschnittene Formschlusselemente 943 ausgebildet, wie gut in der vergrößerten Detaildarstellung von Figur 5 erkennbar ist.

Die Fügeabschnitte 942 sind jeweils durch einen Isolationsschlitz 944 zum Getriebeteilgehäuse 911 abgegrenzt.

Zur Fertigung werden eine Antriebsbaugruppe 92 und eine Getriebebaugruppe 91 zur Verfügung gestellt, und wie in Figur 6 gezeigt angeordnet und ausgerichtet. Anschließend wird die Antriebsbaugruppe 92 in der senkrecht zur Antriebsachse A und senkrecht zur Getriebeachse G stehenden Montagerichtung M auf die Getriebebaugruppe 91 zu bewegt, bis das Getriebeteilgehäuse 911 in dem Aufnahmebereich 927 zwischen den Spannelementen 94 aufgenommen ist. Das Getriebeteilgehäuse 911 wird dabei quer zur Getriebeachse G relativ zum Antriebsteilgehäuse 921 positioniert, bis der optimale Eingriffsabstand zwischen der Antriebsachse A und der Getriebeachse G eingestellt ist, wobei die Schnecke 922 durch die Eingriffsöffnung 913 taucht und in das Schneckenrad 912 eingreift, und der optimale Wirkeingriff von Schnecke 922 und Schneckenrad 912 erzeugt ist.

Die auf den Innenseiten der Spannelemente 92 einander gegenüberliegend angeordneten Fügeabschnitte 941 haben, in der quer zur Montagerichtung M liegenden Vorspannrichtung bzw. Fügerichtung F gemessen, einen Abstand x voneinander. Über die Formschlusselemente 943 gemessen hat das Getriebeteilgehäuse 911 einen Durchmesser D, der größer ist als der Abstand x, also: D > x. Dadurch werden die Spannelemente 94 bei Einsetzen der Getriebebaugruppe 91 entgegen der Fügerichtung F elastisch auseinander gespreizt, wie in Figur 6 mit den Pfeilen angedeutet und somit elastisch vorgespannt. Dabei üben die Spannelemente 94 als Rückstellkraft eine elastische Spannkraft aus, mit der die Fügeabschnitte 941 und 941 in der Fügerichtung F gegeneinander angedrückt werden.

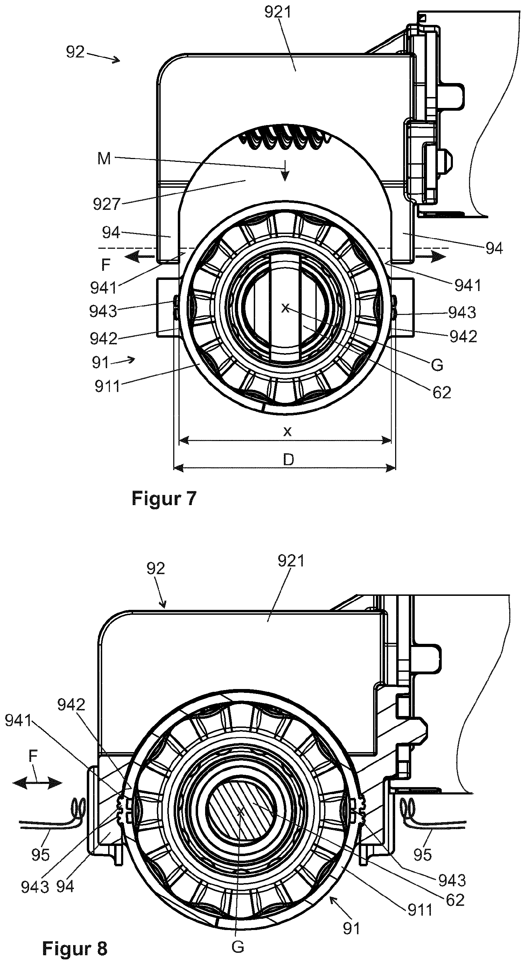

Wenn die Antriebsbaugruppe 92 und die Getriebebaugruppe 91 im Wirkeingriff relativ zueinander positioniert sind, wird mittels eines Induktors 95 thermische Energie in den Fügebereich 941 eingetragen, wie in Figur 7 dargestellt, in dem das Getriebeteilgehäuse 911 lokal im Bereich der Fügeabschnitte 942 aufgeheizt werden, beispielsweise induktiv, in dem der Induktor mit einem elektrischen Strom beaufschlagt wird. Alternativ kann es auch vorgesehen sein, dass die thermische Energie beispielsweise durch Heißprägen oder mittels Ultraschall in die Fügeverbindung eingetragen wird. In jedem Fall wird dabei wird das Kunststoffmaterial im Fügebereich 941 lokal aufgeschmolzen, und durch die von den Spannelementen 94 in Fügerichtung F, also in Vorspannrichtung ausgeübte Spannkraft werden die Formschlusselemente 93 in Fügerichtung F in den aufgeschmolzenen, weichen Fügebereich 941 plastisch eingeformt. Nach dem Erkalten ist das Kunststoffmaterial der Antriebsbaugruppe 92 stoffschlüssig unlösbar mit der Getriebebaugruppe 91 verbunden, wobei die Formschlusselemente 93 in das Kunststoffmaterial formschlüssig eingebettet sind. Dadurch ist der Abstand zwischen der Antriebsachse A und der Getriebeachse G in einem optimalen Wirkeingriff der Schnecke 922 mit dem Schneckenrad 912 fixiert. Bevorzugt erfolgt die Eintragung der thermischen Energie derart, dass die Spannelemente nach dem Erkalten noch eine restliche Spannkraft bereitstellen.

Die Formschlusselemente 943 sind bevorzugt so ausgebildet, dass das freie Ende eine größere Breite aufweist als der am Getriebeteilgehäuse 911 ausgebildete Abschnitt. Dadurch kann ein Hinterschnitt bereitgestellt werden, so dass diese Formschlusselemente 943 von dem aufgeschmolzenen Kunststoff umschlossen werden und nach dem erkalten eine formschlüssige Verbindung bereitstellen. Bevorzugt sind die Formschlusselemente 943 als Einprägung des Getriebeteilgehäuses als lokaler plastischer Deformationsabschnitt ausgebildet.

Durch die Isolationsschlitze 944 sind die Fügeabschnitte 942 thermisch gegenüber dem Getriebeteilgehäuse 911 isoliert, so dass dessen Aufheizung beim Schweißprozess verringert wird.

Figur 8 zeigt in derselben Ansicht wie Figur 6 eine Variante der Erfindung. Dabei hat das zylindrische, rohrförmige Getriebeteilgehäuse 911 einen durchgehenden Außendurchmesser D, der größer ist als der in Fügerichtung F gemessene Abstand x zwischen den innen an den Spannelementen 94 einander gegenüberliegenden Fügebereichen 941. Dadurch werden beim Zusammensetzen in Montagerichtung M die Spannelemente 94 elastisch auseinander gespreizt, wie mit den Pfeilen angedeutet. Als elastische Rückstellkraft drückt die Spannkraft die Fügeabschnitte 941 und 942 in Fügerichtung F, also der Vorspannrichtung, gegeneinander, auch wenn keine äußere Fügekraft ausgeübt wird. Dadurch kann wie vorangehend beschrieben reproduzierbar eine zuverlässige und belastbare Fügeverbindung erzeugt werden, beispielsweise durch das Eintragen von thermischer Energie durch einen bestromten Induktor.

Ein Vorteil der erfindungsgemäßen Ausbildung ist, dass durch die vorgespannten Spannelemente 94 die Fügeabschnitte 941 und 942 auch nach dem Erkalten in Kontakt gehalten werden, auch wenn Maßabweichungen auftreten, die ohne die erfindungsgemäße Vorspannung ansonsten zu unerwünschter Spaltbildung zwischen den Fügeabschnitten 941 und 942 führen könnten. Weiters können Ausdehnungsefekte auf Grund unterschiedlicher Wärmeausdehnungskoeffizienten der Fügerabschnitte 941 und 942 wirksam kompensiert werden.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5, 6: Verstellantrieb
- 51, 61: Spindelmutter
- 52, 62: Gewindespindel
- 54: Befestigungselement
- 55, 65: Stellmotor
- 74: Innengewinde
- 8, 9: Getriebe
- 81, 91: Getriebegehäuse
- 91: Getriebebaugruppe
- 911: Getriebeteilgehäuse
- 912: Schneckenrad
- 913: Eingriffsöffnung
- 92: Antriebsbaugruppe
- 921: Antriebsteilgehäuse
- 922: Schnecke
- 923: Antriebswelle
- 924: Lager
- 925: Lager
- 926: Befestigungsabschnitte
- 927: Aufnahmebereich
- 928: Schlitz
- 93: Fügeverbindung
- 94: Spannelemente
- 941: Fügeabschnitte
- 942: Fügeabschnitte
- 943: Formschlusselement
- 944: Isolationsschlitz
- 95: Induktor

- L: Längsachse
- H: Höhenrichtung
- G: Gewindespindelachse (Getriebeachse)
- A: Antriebsachse
- F: Fügerichtung / Vorspannrichtung
- M: Montagerichtung
- x: Abstand
- D: Durchmesser

## Patentansprüche

1. Verstellantrieb (5, 6) für eine motorisch verstellbare Lenksäule (1) für ein Kraftfahrzeug, umfassend ein Getriebe (8, 9) mit einer Antriebsbaugruppe (82, 92), in dem ein um eine Antriebsachse (A) drehend antreibbares Antriebsrad (922) gelagert ist, welches in Wirkeingriff steht mit einem Getrieberad (912), welches um eine Getriebeachse (G) drehbar in einer Getriebebaugruppe (81, 91) gelagert ist und welches mit einer Gewindespindel (52) oder einer Spindelmutter (61) eines Spindeltriebs verbunden ist, wobei die Antriebsbaugruppe (82, 92) und die Getriebebaugruppe (81, 91) gegeneinander gerichtete Fügeabschnitte (941) aufweisen und durch mindestens eine Fügeverbindung (93) miteinander verbunden sind,
**dadurch gekennzeichnet,**
**dass** die Antriebsbaugruppe (82, 92) und/oder die Getriebebaugruppe (81, 91) mindestens ein elastisches Spannelement (94) aufweisen, zur Verspannung von Antriebsbaugruppe (82, 92) und Getriebebaugruppe (81, 91) im Bereich der Fügeverbindung (93), wobei das Spannelement (94) ausgebildet ist, die Fügeabschnitte (941) gegeneinander zu verspannen.

2. Verstellantrieb (5, 6) nach Anspruch 1, **dadurch gekennzeichnet, dass** eine Fügeverbindung (93) an dem Spannelement (94) angeordnet ist.

3. Verstellantrieb (5, 6) nach einem der vorangehenden Ansprüche, **dadurch gekennzeichnet, dass** die Antriebsbaugruppe (82, 92) und die Getriebebaugruppe (81, 91) in einer quer zur Antriebsachse (A) und/oder zur Getriebeachse (G) stehenden Montagerichtung (M) zusammengesetzt sind, wobei die Verspannung in eine Vorspannrichtung (F) wirkt, die im Wesentlichen senkrecht zur Montagerichtung (M) steht.

4. Verstellantrieb (5, 6) nach einem der vorangehenden Ansprüche, **dadurch gekennzeichnet , dass** das Spannelement (94) als Federzunge ausgebildet ist.

5. Verstellantrieb (5, 6) nach einem der vorangehenden Ansprüche, **dadurch gekennzeichnet, dass** das Spannelement (94) einstückig mit der Antriebsbaugruppe (82, 92) oder der Getriebebaugruppe (81, 91) ausgebildet ist.

6. Verstellantrieb (5, 6) nach einem der vorangehenden Ansprüche, **dadurch gekennzeichnet, dass** die Antriebsbaugruppe (82, 92) Befestigungsabschnitte (926) aufweist, zwischen denen die Getriebebaugruppe (81, 91) aufgenommen ist.

7. Verstellantrieb (5, 6) nach einem der vorangehenden Ansprüche, **dadurch gekennzeichnet, dass** die Fügeverbindung (93) eine unlösbare Verbindung aufweist.

8. Verstellantrieb (5, 6) nach einem der vorangehenden Ansprüche, **dadurch gekennzeichnet, dass** zumindest im Bereich der Fügeverbindung (93) die Antriebsbaugruppe (92) einen thermoplastischen Kunststoff aufweist, und dass zumindest im Bereich der Fügeverbindung (93) die Getriebebaugruppe (91) einen metallischen Werkstoff aufweist.

9. Antriebseinheit für einen Verstellantrieb (5, 6), mit einem Getriebe (8, 9), in dem ein um eine Antriebsachse (A) drehend antreibbares Antriebsrad (922) gelagert ist, welches in Wirkeingriff steht mit einem Getrieberad (912), welches um eine Getriebeachse (G) drehbar in dem Getriebe (8, 9) gelagert ist, wobei das Getriebe (8, 9) zusammengesetzt ist aus einer Antriebsbaugruppe (92), die das Antriebsrad (922) aufweist, und einer Getriebebaugruppe (91), die das Getrieberad (912) aufweist, wobei die Antriebsbaugruppe (92) und die Getriebebaugruppe (91) gegeneinander gerichtete Fügeabschnitte (941) aufweisen und durch eine Fügeverbindung (93) miteinander verbunden sind, **dadurch gekennzeichnet, dass** die Antriebsbaugruppe (92) und/oder die Getriebebaugruppe (91) mindestens ein elastisches Spannelement (94) aufweisen, zur Verspannung von Antriebsbaugruppe (92) und Getriebebaugruppe (91) im Bereich der Fügeverbindung (93), wobei das Spannelement (94) ausgebildet ist, die Fügeabschnitte (941) gegeneinander zu verspannen.

10. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5, 6), der mit der Trageinheit (2) und mit der Stelleinheit (3) verbunden ist, und von dem die Stelleinheit (3) relativ zur Trageinheit (2) verstellbar ist, wobei der Verstellantrieb (5, 6) eine in eine Spindelmutter (51) eingreifende Gewindespindel (52, 62) aufweist,
**dadurch gekennzeichnet, dass** der Verstellantrieb (5, 6) ausgebildet ist nach einem oder mehreren der Ansprüche 1 bis 9.

11. Verfahren zur Herstellung eines Verstellantriebs (5, 6) für eine motorisch verstellbare Lenksäule (1) für ein Kraftfahrzeug, mit den Schritten:
- Bereitstellen einer Antriebsbaugruppe (82, 92), mit einem darin um eine Antriebsachse (A) drehbar gelagerten Antriebsrad (922),
- Bereitstellen einer Getriebebaugruppe (81, 91), mit einem darin um eine Getriebeachse (G) drehbar gelagerten Getrieberad (912),
- Positionieren von Antriebsbaugruppe (82, 92) und Getriebebaugruppe (81, 91) relativ zueinander in Eingriffsposition in einer Montagerichtung (M), so dass das Antriebsrad (922) und Getrieberad (912) in Wirkeingriff gebracht werden, wobei die Antriebsbaugruppe (82, 92) und die Getriebebaugruppe (81, 91) durch mindestens ein Spannelement (94), welches Bestandteil der Antriebsbaugruppe und/oder der Gebtriebebaugruppe ist, im Bereich der Fügeverbindung (93) in einer Vorspannrichtung (F) quer zur Montagerichtung (M) elastisch miteinander verspannt werden,
- Erzeugen einer festen Fügeverbindung (93) zum relativen Fixieren von Antriebsbaugruppe (92) und Getriebebaugruppe (91).

12. Verfahren nach Anspruch 11, **dadurch gekennzeichnet, dass** zum Fixieren von Antriebsbaugruppe (92) und Getriebebaugruppe (91) an einem Spannelement (94) eine Fügeverbindung (93) des Antriebsteilgehäuses (92) mit dem Getriebeteilgehäuse (91) erzeugt wird.

## Claims

1. Adjustment drive (5, 6) for a motor-adjustable steering column (1) for a motor vehicle, comprising a transmission (8, 9) with a drive assembly (82, 92), in which a drive wheel (922) is mounted which can be driven in rotation about a drive axis (A) and which is in operative engagement with a transmission wheel (912) which is mounted in a transmission assembly (81, 91) and which is connected to a threaded spindle (52) or a spindle nut (61) of a spindle drive, wherein the drive assembly (82, 92) and the gear assembly (81, 91) have joining portions (941) directed towards one another and are connected to one another by at least one joining connection (93),
**characterised in**
**in that** the drive assembly (82, 92) and/or the transmission assembly (81, 91) have at least one elastic clamping element (94) for clamping the drive assembly (82, 92) and the transmission assembly (81, 91) in the region of the joint connection (93), the clamping element (94) being designed to clamp the joint sections (941) against one another.

2. Adjustment drive (5, 6) according to claim 1, **characterised in that** a joint connection (93) is arranged on the clamping element (94).

3. Adjustment drive (5, 6) according to one of the preceding claims, **characterised in that** the drive assembly (82, 92) and the gear assembly (81, 91) are assembled in a mounting direction (M) transverse to the drive axis (A) and/or to the gear axis (G), the tensioning acting in a pretensioning direction (F) which is substantially perpendicular to the mounting direction (M).

4. Adjustment drive (5, 6) according to one of the preceding claims, **characterised in that** the tensioning element (94) is designed as a spring tongue.

5. Adjustment drive (5, 6) according to one of the preceding claims, **characterised in that** the clamping element (94) is formed integrally with the drive assembly (82, 92) or the gear assembly (81, 91).

6. Adjustment drive (5, 6) according to one of the preceding claims, **characterised in that** the drive assembly (82, 92) has fastening sections (926) between which the gear assembly (81, 91) is accommodated.

7. Adjustment drive (5, 6) according to one of the preceding claims, **characterised in that** the joint connection (93) has a non-detachable connection.

8. Adjustment drive (5, 6) according to one of the preceding claims, **characterised in that** the drive assembly (92) comprises a thermoplastic material at least in the region of the joint connection (93), and **in that** the gear assembly (91) comprises a metallic material at least in the region of the joint connection (93).

9. Drive unit for an adjustment drive (5, 6), having a gear (8, 9) in which a drive wheel (922) is mounted which can be driven in rotation about a drive axis (A) and which is in operative engagement with a gear wheel (912), which is mounted in the transmission (8, 9) so as to be rotatable about a transmission axis (G), the transmission (8, 9) being composed of a drive assembly (92), which has the drive wheel (922), and a transmission assembly (91), which has the transmission wheel (912), wherein the drive assembly (92) and the transmission assembly (91) have joining sections (941) directed towards one another and are connected to one another by a joining connection (93), **characterised in that in that** the drive assembly (92) and/or the transmission assembly (91) have at least one elastic clamping element (94) for tensioning the drive assembly (92) and transmission assembly (91) in the region of the joint connection (93), the clamping element (94) being designed to tension the joint sections (941) against one another.

10. Motorised adjustable steering column (1) for a motor vehicle, having a support unit (2) which can be attached to a vehicle body and by which an adjusting unit (3) is held, in which a steering spindle (32) is mounted rotatably about a longitudinal axis (L), and having an adjustment drive (5, 6), which is connected to the support unit (2) and to the adjusting unit (3), and by which the adjusting unit (3) is adjustable relative to the support unit (2), wherein the adjustment drive (5, 6) has a threaded spindle (52, 62) engaging in a spindle nut (51),
**characterised in that** the adjustment drive (5, 6) is designed according to one or more of claims 1 to 9.

11. Method for manufacturing an adjustment drive (5, 6) for a motorised adjustable steering column (1) for a motor vehicle, comprising the steps of:
- Providing a drive assembly (82, 92) having a drive wheel (922) rotatably mounted therein about a drive axle (A),
- Providing a transmission assembly (81, 91) with a transmission wheel (912) rotatably mounted therein about a transmission axis (G),
- Positioning of drive assembly (82, 92) and gear assembly (81, 91) relative to one another in an engagement position in an assembly direction (M), so that the drive wheel (922) and gear wheel (912) are brought into operative engagement, wherein the drive assembly (82, 92) and the gear assembly (81, 91) are elastically braced together by at least one clamping element (94), which is part of the drive assembly and/or the gear assembly, in the region of the joint connection (93) in a pretensioning direction (F) transverse to the assembly direction (M),
- Creation of a fixed joint (93) for relative fixing of the drive assembly (92) and transmission assembly (91).

12. Method according to claim 11, **characterised in that** a joining connection (93) of the drive part housing (92) to the gear part housing (91) is produced for fixing the drive assembly (92) and gear assembly (91) to a clamping element (94).

## Revendications

1. Entraînement de réglage (5, 6) pour une colonne de direction réglable par moteur (1) pour un véhicule automobile, comprenant une transmission (8, 9) avec un ensemble d'entraînement (82, 92), dans lequel est montée une roue d'entraînement (922) qui peut être entraînée en rotation autour d'un axe d'entraînement (A) et qui est en prise opérationnelle avec une roue de transmission (912) qui est montée dans un ensemble de transmission (81, 91) et qui est reliée à une broche filetée (52) ou à un écrou de broche (61) d'un entraînement par broche, dans lequel l'ensemble d'entraînement (82, 92) et l'ensemble de transmission (81, 91) ont des parties de jonction (941) dirigées l'une vers l'autre et sont reliées l'une à l'autre par au moins une connexion de jonction (93),
**caractérisé en**
en ce que l'ensemble d'entraînement (82, 92) et/ou l'ensemble de transmission (81, 91) comportent au moins un élément de serrage élastique (94) pour serrer l'ensemble d'entraînement (82, 92) et l'ensemble de transmission (81, 91) dans la zone de la connexion de jonction (93), l'élément de serrage (94) étant conçu pour serrer les parties de jonction (941) l'une contre l'autre.

2. Entraînement de réglage (5, 6) selon la revendication 1, **caractérisé par le fait qu'**un raccord d'articulation (93) est disposé sur l'élément de serrage (94).

3. Entraînement de réglage (5, 6) selon l'une des revendications précédentes, **caractérisé en ce que** l'ensemble d'entraînement (82, 92) et l'ensemble d'engrenage (81, 91) sont assemblés dans une direction de montage (M) transversale à l'axe d'entraînement (A) et/ou à l'axe d'engrenage (G), la tension agissant dans une direction de précontrainte (F) qui est sensiblement perpendiculaire à la direction de montage (M).

4. Entraînement de réglage (5, 6) selon l'une des revendications précédentes, **caractérisé par le fait que** l'élément de tension (94) est conçu comme une languette à ressort.

5. Entraînement de réglage (5, 6) selon l'une des revendications précédentes, **caractérisé par le fait que** l'élément de serrage (94) est formé intégralement avec l'ensemble d'entraînement (82, 92) ou l'ensemble d'engrenage (81, 91).

6. Entraînement de réglage (5, 6) selon l'une des revendications précédentes, **caractérisé en ce que** l'ensemble d'entraînement (82, 92) comporte des sections de fixation (926) entre lesquelles l'ensemble d'engrenage (81, 91) est logé.

7. Entraînement de réglage (5, 6) selon l'une des revendications précédentes, **caractérisé par le fait que** le raccord d'articulation (93) a un raccord non détachable.

8. Entraînement de réglage (5, 6) selon l'une des revendications précédentes, **caractérisé par le fait que** l'ensemble d'entraînement (92) comprend un matériau thermoplastique au moins dans la région de la connexion de joint (93), et **par le fait que** l'ensemble d'engrenage (91) comprend un matériau métallique au moins dans la région de la connexion de joint (93).

9. Unité d'entraînement pour un entraînement de réglage (5, 6), comportant une transmission (8, 9) dans laquelle est montée une roue d'entraînement (922) qui peut être entraînée en rotation autour d'un axe d'entraînement (A) et qui est en prise opérationnelle avec une roue dentée (912), qui est montée dans la transmission (8, 9) de manière à pouvoir tourner autour d'un axe de transmission (G), la transmission (8, 9) étant composée d'un ensemble d'entraînement (92), qui comporte la roue d'entraînement (922), et d'un ensemble de transmission (91), qui comporte la roue de transmission (912), dans lequel l'ensemble d'entraînement (92) et l'ensemble de transmission (91) ont des sections de jonction (941) dirigées l'une vers l'autre et sont reliées l'une à l'autre par une connexion de jonction (93), **caractérisé en ce que** l'ensemble d'entraînement (92) et/ou l'ensemble de transmission (91) ont au moins un élément de serrage élastique (94) pour tendre l'ensemble d'entraînement (92) et l'ensemble de transmission (91) dans la région de la connexion de jonction (93), l'élément de serrage (94) étant conçu pour tendre les sections de jonction (941) l'une contre l'autre.

10. Colonne de direction réglable motorisée (1) pour un véhicule automobile, comportant une unité de support (2) qui peut être fixée à la carrosserie du véhicule et par laquelle une unité de réglage (3) est maintenue, dans laquelle un axe de direction (32) est monté rotatif autour d'un axe longitudinal (L), et comportant un entraînement de réglage (5, 6), qui est relié à l'unité de support (2) et à l'unité de réglage (3), et par lequel l'unité de réglage (3) est ajustable par rapport à l'unité de support (2), dans lequel l'unité de réglage (5, 6) a une broche filetée (52, 62) s'engageant dans un écrou de broche (51),
**caractérisé par le fait que** l'entraînement de réglage (5, 6) est conçu selon l'une ou plusieurs des revendications 1 à 9.

11. Procédé de fabrication d'une commande de réglage (5, 6) pour une colonne de direction réglable motorisée (1) pour un véhicule automobile, comprenant les étapes suivantes :
- Fournir un ensemble d'entraînement (82, 92) comportant une roue motrice (922) montée rotative autour d'un axe d'entraînement (A),
- Fournir un ensemble de transmission (81, 91) avec une roue de transmission (912) montée rotative autour d'un axe de transmission (G),
- Positionnement de l'ensemble d'entraînement (82, 92) et de l'ensemble d'engrenage (81, 91) l'un par rapport à l'autre dans une position d'engagement dans une direction d'assemblage (M), de sorte que la roue d'entraînement (922) et la roue d'engrenage (912) soient mises en prise opérationnelle, dans laquelle l'ensemble d'entraînement (82, 92) et la roue dentée (81, 91) sont maintenus élastiquement l'un contre l'autre par au moins un élément de serrage (94), qui fait partie de la roue motrice et/ou de la roue dentée, dans la zone de la liaison articulaire (93) dans une direction de précontrainte (F) transversale à la direction d'assemblage (M),
- Création d'un joint fixe (93) pour la fixation relative de l'ensemble d'entraînement (92) et de l'ensemble de transmission (91).

12. Procédé selon la revendication 11, **caractérisé par** la réalisation d'une liaison (93) entre le carter de la partie motrice (92) et le carter de la partie dentée (91) pour fixer l'ensemble de la partie motrice (92) et l'ensemble de la partie dentée (91) à un élément de serrage (94).
